# EUROPÄISCHE PATENTSCHRIFT

(11) **EP 1 943 463 B1**
(45) Veröffentlichungstag und Bekanntmachung des Hinweises auf die Patenterteilung: **06.11.2013**
(21) Anmeldenummer: 06791383.0
(22) Anmeldetag: 14.09.2006
(51) Int. Cl.: F23G 7/10

(54) **VERFAHREN ZUR ERZEUGUNG THERMISCHER ENERGIE MIT EINEM BRENNER**
METHOD OF GENERATING THERMAL ENERGY USING A BURNER
PROCEDE DE PRODUCTION D'ENERGIE THERMIQUE AU MOYEN D'UN BRULEUR

(30) Priorität: 21.09.2005 DE 102005045166
(43) Veröffentlichungstag der Anmeldung: 16.07.2008
(73) Patentinhaber: Fachhochschule Bingen, 55411 Bingen (DE)
(72) Erfinder: SEHN, Winfried, 55411 Bingen (DE); GERBER, Helmut, 55411 Bingen (DE)
(74) Vertreter: Müller, Jochen
(86) Internationale Anmeldenummer: PCT/DE2006/001614
(87) Internationale Veröffentlichungsnummer: WO 2007/033642

(56) Entgegenhaltungen:
- DE-A1- 19 801 761
- US-A- 3 068 812
- US-A- 4 922 839
- US-A- 4 934 283
- US-A- 5 279 234
- US-A- 6 116 168
- US-B1- 6 521 365
- MARTIN KALTSCHMITT ET AL: 'Energie aus Biomasse : Grundlagen, Techniken und Verfahren', [Online] 01 Januar 2001, Seiten 519 - 520, XP055026365 ISBN: 978-3-54-064853-6 Gefunden im Internet: <URL:http://books.google.nl/books> [gefunden am 2012-05-07]

## Beschreibung

Die Erfindung bezieht sich auf ein Verfahren zur Erzeugung thermischer Energie mit einem FLOX-Brenner mit einer internen Abgasrezirkulation, in dem eine flammlose Oxidation eines aus einer Biomasse, insbesondere aus Getreide und/oder halmartigen Energieträgern, gewonnenen Gases stattfindet, und eine Vorrichtung dazu.

Um dem dezentralen Bedarf und der dezentralen Verfügbarkeit von Biomasse gerecht zu werden, ist besonderer Wert auf Energieanlagen mit kleiner Leistung zu legen. Die energetische Nutzung von Getreide und halmgutartigen Bioenergieträgern ist für kleine Leistungsklassen, beispielsweise kleiner 150 kWth, derzeit in der Praxis nicht gelöst. Aktuelle Entwicklungen auf diesem Sektor zeigen, dass übliche Verbrennungsverfahren hinsichtlich einer optimalen Energienutzung und geringst möglicher Abgasemissionen nicht den speziellen Anforderungen des Brennstoffes gerecht werden. Insbesondere die Nutzung von Getreide und halmgutartigen Bioenergieträgern bereitet hier Probleme, da im Vergleich zu anderen Biomassen, wie beispielsweise Holz, brennstoffbedingt höhere Stickoxidemissionen und Staubemissionen zu erwarten sind.

Bei der Verbrennung von halmgutartigen Brennstoffen und Getreide gibt es signifikante Unterschiede zur Verbrennung von Holzbrennstoffen. Hier sind insbesondere der ca. zehnmal höhere Aschegehalt sowie der vielfach höhere Gehalt an Stickstoff und Chlor zu nennen. Diese Elemente sind bei der Verbrennung für die Bildung von Luftschadstoffen verantwortlich. Da die Staubemissionen einer Feststofffeuerung eng mit dem Aschegehalt des eingesetzten Brennstoffes korrelieren, sind auch hier deutlich höhere Emissionen zu erwarten. Hohe Chlorgehalte begünstigen in Verbindung mit einer ungünstigen Temperaturführung, beispielsweise einer zu geringen Feuerungstemperatur oder einer zu langsamen Abkühlung, und einem unvollständigem Ausbrand eine De-Novo-Synthese von hochtoxischen organischen Chlorverbindungen, wie Dibenzodioxinen und Dibenzofuranen (PCDD/F). Die im Vergleich niedrige Erweichungstemperatur der gebildeten Aschen macht eine speziell entwickelte Verbrennungstechnik erforderlich, um Ascheanhaftungen und damit eine Störung des kontinuierlichen Dauerbetriebes einer Feuerung zu verhindern.

Der Focus in der Entwicklung von Biomassevergasern lag in den vergangenen Jahren allgemein in einer Erzeugung von teerfreiem Synthesegas aus Holzbrennstoffen, das nach dem Durchlaufen einer mehr oder weniger aufwändigen Gasreinigung in einem Verbrennungsmotor verbrannt wird. Trotz großer Anstrengungen ist die Teerproblematik bei der Verwertung von Biomasse mit einem Verbrennungsmotor nicht hinreichend gelöst. Die in einem Gas enthaltenen Teerbestandteile können wesentliche Aggregate des Verbrennungsmotors, wie z. B. einen Turbolader, Ladeluftkühler oder Ventile, im Betrieb zerstören. Wegen des relativ geringen Heizwertes des so genannten Rohgases gegenüber Erdgas, muss bei der Gasaufbereitung das Rohgas gekühlt werden, um den Füllungsgrad im Verbrennungsmotor oder einer Turbine zu steigern. Bei der Kühlung des Rohgases vor der Gasreinigung wird thermodynamisch vorhandene Energie zunichte gemacht, was sich negativ auf die energetische Gesamtbetrachtung auswirkt. Durch den hohen technischen Aufwand für die Rohgasaufbereitung kommen aus wirtschaftlichen Gründen nur große Anlagen mit mehr als 5 MW Wärmeleistung in Frage. In diesem Leistungsbereich können auch aufwändige Vergasungsverfahren, wie die zirkulierende Wirbelschicht (UMSICHT) oder die Flugstromvergasung (CHOREN), realisiert werden. Diese großen installierten Leistungen widersprechen aber der vorteilhaften dezentralen Nutzung von Biomasse, da zum einen die Anlagen nur dort wirtschaftlich betrieben werden können, wo viel Biomasse anfällt oder die Anfahrwege kurz sind und somit geringe Transportkosten entstehen, da die Energiedichte von Biomasse im Vergleich zu anderen Energieträgern (z.B. Erdöl) relativ gering ist, und zum anderen erweist es sich als problematisch, die anfallende Wärme bei dem ohnehin vorhandenen Wärmeüberschuss (elektrische Wirkungsgrade ca. 10 - 25%) an einem Standort sinnvoll zu nutzen, was sich letztendlich negativ auf den Gesamtwirkungsgrad auswirkt.

Aus der Praxis bekannte Biomassevergaser mit Leistungen unter 1 MWth sind durchweg Festbettvergaser, die, bedingt durch ihr Funktionsprinzip, in der Brennstoffauswahl stark eingeschränkt sind. Hier kommen meist speziell konditionierte Holzsortimente zum Einsatz, die bezüglich der Holzart, Stückigkeit, des Aschegehaltes, des Wassergehaltes etc., sehr engen Toleranzen unterworfen sind. Ein Einsatz von Getreide und halmgutartigen Biomassen ist in diesen Anlagen nicht möglich. Das Vergasungsgut wird im Vergaser allein durch Gravitationskräfte bewegt, wodurch es bei Abweichungen von der idealen Brennstoffbeschaffenheit und -zusammensetzung leicht zu Betriebsstörungen durch Brückenbildung und Verschlackung kommt.

Die DE 101 13 595 A1 offenbart ein Verfahren und eine Vorrichtung zur Erzeugung von Wärmeenergie durch Verbrennen eines Getreides, dem vor seiner Verbrennung Energie, insbesondere Wärmeenergie, in einer Brennkammer zugeführt wird, um aus dem Getreide Popcorn zu bilden.

Im Weiteren ist aus der Praxis das so genannte FLOX-Verfahren bekannt, bei dem eine Oxidation eines Brennstoffes überwiegend bzw. vollständig flammlos erfolgt. Bei der flammlosen Oxidation werden durch eine hohe Abgas/Luft-Vormischung Spitzentemperaturen in der Flamme vermieden und eine thermische Stickoxidbildung (NOx), auch bei einer hohen Luftvorwärmung, fast vollständig unterdrückt.

Die US 6 521 365 B1 offenbart ein Verfahren zur Erzeugung eines Synthesegases zur Durchführung einer Dimethylether-Synthese (DME-Synthese). Die Pyrolyse erfolgt durch exotherme Verbrennungsreaktionen in einer Wirbelschicht mit einer katalytischen Nachreaktion, die nach einer Gasreinigung angeordnet ist und Ausgangsstoffe für die DME-Synthese bereitstellt.

Aus der US 3 068 812 A ist eine Anlage zur Entsorgung von brennbaren Abfällen bekannt, deren Pyrolyse durch elektrische Beheizung gestartet wird. Anschließend werden die Abfälle durch exotherme Reaktionen unter Sauerstoffzufuhr gleichzeitig pyrolysiert und verbrannt. Die Wärmeerzeugung dient nur dem Entsorgungsprozess, der als Batchprozess abläuft und damit nicht kontinuierlich ist.

Eine ähnliche Anlage zur Müllentsorgung, die im Batchbetrieb arbeitet, zeigt die US 4 934 283 A. Auch hier erfolgt die Pyrolyse durch eine Beheizung mittels elektrischer Heizspiralen und das Pyrolysegas wird in einer nachgeschalteten Brennkammer unter Zugabe von Luft und weiterer elektrischer Heizleistung oxidiert. Zum Abschluss wird durch Luftzufuhr in die Pyrolysekammer der Restkohlenstoff oxidiert.

Ferner offenbart die US 4 922 839 A eine Anlage, bei der die Pyrolyse in einem gelochten Rohr stattfindet. Die Beheizung der Pyrolyse erfolgt durch eine exotherme Verbrennungsreaktion in einem Hüllrohr. Die über die Löcher aus dem Rohr austretenden Pyrolysegase reagieren mit der in das Hüllrohr einströmenden Luft. Da eine vollständige Oxidation des Kohlenstoffs angestrebt wird, findet am Ende des Pyrolysereaktors noch eine Dampfreformierung statt.

Die DE 198 01 761 A1 beschreibt die thermische Verwertung organischer Spezies mittels eines Pyrolysereaktors.

Es ist Aufgabe der Erfindung, ein Verfahren und eine Vorrichtung der eingangs genannten Art zu schaffen, mit dem bzw. der eine thermische Verwertung von problematischen Biomassen in einem Brenner einer verhältnismäßig geringen Leistungsklasse schadstoffarm zu realisieren ist.

Erfindungsgemäß wird die Aufgabe bei dem Verfahren dadurch gelöst, dass die Biomasse einem Pyrolysereaktor zugeführt und das in dem Pyrolysereaktor gewonnene Gas dem FLOX-Brenner über eine Gasleitung zugeleitet wird, wobei der doppelwandig ausgebildete Pyrolysereaktor außenseitig mit dem Abgas des FLOX-Brenners beaufschlagt wird, das in einen über eine Abgasleitung mit dem FLOX-Brenner verbundenen Zwischenraums geleitet wird, wobei Verbrennungsluft mittels eines in die Abgasleitung eingesetzten Wärmetauschers vorgewärmt wird.

Aufgrund dieser Maßnahmen findet eine Energieumwandlung bzw. die Gewinnung thermischer Energie aus Biomasse statt, die insbesondere bei Brennern mit einer verhältnismäßig geringen Leistung, beispielsweise unter 150kWth, bevorzugt bis ca. 50kWth, Anwendung findet, wobei mit der so genannten FLOX-Feuerung, nach dem der Brenner arbeitet, eine Reduktion der Emissionen einhergeht, da durch die interne Abgasrezirkulation im FLOX-Brenner die Spitzentemperatur der Feuerung herabgesetzt und damit die Bildung von thermischen NOx verhindert wird. Die Biomasse, beispielsweise Getreide und/oder halmartige Energieträger, werden bei ca. 500°C pyrolysiert und es entsteht Pyrolysegas, das in die Flox-Feuerung gelangt. Durch die Pyrolyse werden ca. 70 % des Energieinhaltes der eingesetzten Biomasse, bzw. ca. 85 % der eingesetzten Brennstoffmasse (bei lufttrockenem Brennstoff) in Biogas umgewandelt, wodurch eine wirtschaftliche Energieumwandlung gegeben ist, die dem dezentralen Bedarf und der dezentralen Verfügbarkeit von Biomasse gerecht wird.

Mit dem Abgas des FLOX-Brenners wird dessen Verbrennungsluft vorgewärmt. Damit wird die thermische Energie des Abgases sinnvoll dem Verfahren und nicht nutzlos der Umgebung zugeführt.

Um das Verfahren zu automatisieren, wird zweckmäßigerweise der Pyrolysereaktor kontinuierlich mit Biomasse, vorzugsweise Getreide und/oder halmartige Energieträger, beschickt.

In Ausgestaltung wird ein in dem Pyrolysereaktor anfallender Biokoks einer energetischen Verwertung zugeführt. Der Biokoks fällt als Nebenprodukt bei dem Pyrolyseprozess aus und kann z.B. zur Kohleverflüssigung weiter energetisch verwertet werden, um die in der Regel eingesetzte fossile Kohle durch regenerativ erzeugte Kohle mit deutlichem CO₂-Vorteil zu ersetzen.

Die Aufgabe wird bei einer Vorrichtung zur Erzeugung thermischer Energie mit einem Flox-Brenner mit interner Abgasrezirkulation, in dem eine flammlose Oxidation eines aus einer Biomasse, insbesondere aus Getreide und/oder halmartigen Energieträgern, gewonnenen Gases stattfindet, insbesondere zur Durchführung des zuvor erläuterten Verfahrens, erfindungsgemäß dadurch gelöst, dass der Brenner mit einem Pyrolysereaktor zur Erzeugung des Gases über eine Gasleitung verbunden ist, wobei der Pyrolysereaktor zur Bildung eines über eine Abgasleitung mit dem FLOX-Brenner verbundenen Zwischenraums doppelwandig ausgebildet und in die Abgasleitung ein Wärmetauscher zur Vorwärmung von Verbrennungsluft eingesetzt ist.

Somit ist eine Vorrichtung realisiert, die bei geringen Schadstoffemissionen die Gewinnung thermischer Energie aus einer Biomasse sicherstellt. Durch die direkte thermische Verwertung des Gases, nämlich des Pyrolysegases, kann auf eine Gasreinigung und eine den Wirkungsgrad der Vorrichtung mindernde Gaskühlung verzichtet werden. Dadurch, dass der der Zwischenraum des Pyrolysereaktors über die Abgasleitung mit dem Brenner verbunden ist, wird die thermische Energie des in dem durch die Oxidation in dem FLOX-Brenner erwärmten Abgases dem Pyrolyseprozess zur Verfügung gestellt. Die Anordnung des Wärmetauschers in der Abgasleitung zur Vorwärmung der Verbrennungsluft eingesetzt bewirkt die Verwertung eines Großteils der thermischen Energie des Abgases.

Bevorzugt weist der Pyrolysereaktor in seinem Inneren zwei ineinander kämmende Schnecken auf. Zweckmäßigerweise sind die Schnecken mit einem Elektromotor gekoppelt. Die beiden ineinander kämmenden Schnecken verhindern Anbackungen der Biomasse und bewirken den Transport sowie die Durchmischung der Biomasse in dem Pyrolysereaktor.

Zweckmäßigerweise steht der Pyrolysereaktor mit einem Vorratsbehälter für die Biomasse in Verbindung. Um einen kontinuierlichen Betrieb der Vorrichtung zu ermöglichen, ist vorteilhafterweise der Pyrolysereaktor unter Zwischenanordnung einer gasdichten Dosiereinrichtung mit dem Vorratsbehälter verbunden. Die Dosiereinrichtung ist selbstverständlich derart gasdicht ausgebildet, dass bei einer Beschickung des Pyrolysereaktors mit Biomasse aus dem Vorratsbehälter kein Pyrolysegas aus dem Pyrolysereaktor in den Vorratsbehälter gelangt.

Nach einer weiteren Ausgestaltung ist der Pyrolysereaktor mit einer Entnahmeeinrichtung für Biokoks versehen. Die Entnahmeeinrichtung kann einen Sammelbehälter umfassen, der in gewissen Zeitabständen bei einer Außerbetriebnahme der Vorrichtung geleert wird oder ist zur kontinuierlichen Abfuhr des bei der Pyrolyse der Biomasse anfallenden Biokokses ausgeführt.

Da die FLOX-Feuerung auf einem verhältnismäßig hohen Temperaturniveau arbeitet, ist zur Umwandlung der thermischen Energie in mechanische Energie bevorzugt der Brenner mit einem Stirlingmotor gekoppelt. Der Stirlingmotor kann zur Erzeugung elektrischer Energie einen Generator antreiben.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

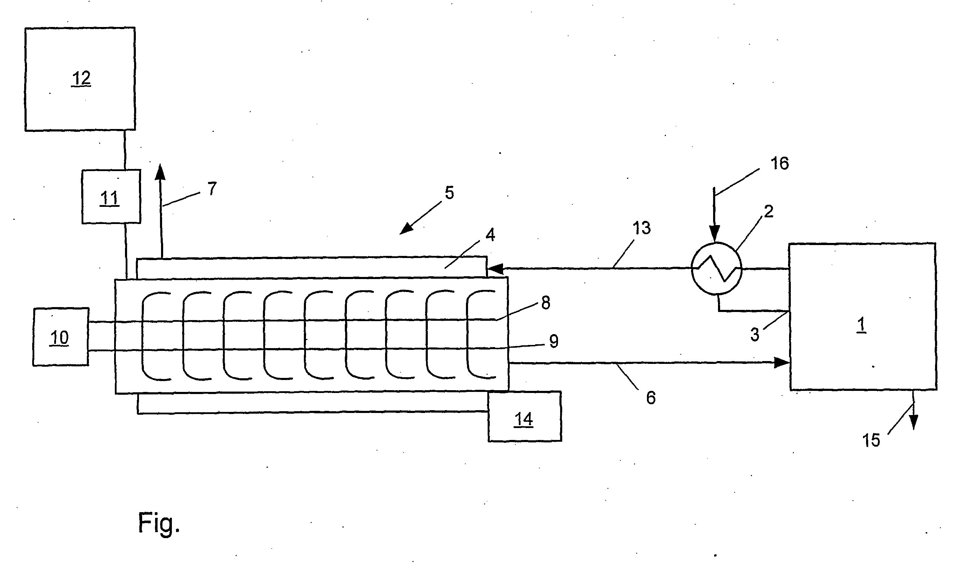

Die Erfindung wird im Folgenden anhand eines Ausführungsbeispieles unter Bezugnahme auf die zugehörige Zeichnung näher erläutert. Die einzige Fig. der Zeichnung zeigt eine schematische Darstellung der erfindungsgemäßen Vorrichtung zur Durchführung des erfindungsgemäßen Verfahrens.

Die Vorrichtung zur Erzeugung thermischer Energie umfasst einen FLOX-Brenner 1, in dem eine flammlose Oxidation eines aus einer Biomasse gewonnenen Biogases stattfindet. Die für die Oxidation erforderliche Verbrennungsluft gelangt, wie durch den Pfeil 16 angedeutet, über einen von einem Abgas des FLOX-Brenners 1 durchströmten Wärmetauscher 2 vorgewärmt durch einen Einlass 3 in den Brenner 1 und das Abgas wird über eine Abgasleitung 13 einem Zwischenraum 4 eines doppelwandigen Pyrolysereaktors 5 für die Pyrolyse der Biomasse zur Erzeugung des über eine Gasleitung 6 in den Brenner 1 geleiteten Gases zugeführt, wobei das Abgas den Zwischenraum 5 des Pyrolysereaktors 5 durch den Auslass 7 verlässt. In seinem Inneren weist der Pyrolysereaktor 5 zwei ineinander kämmende Schnecken 8, 9 auf, die von einem Elektromotor 10 angetrieben werden. Die Schnecken 8, 9 verhindern zum einen Anbackungen der Biomasse innerhalb des Pyrolysereaktors 5 und bewirken zum anderen den Transport sowie die Durchmischung der Biomasse in dem Pyrolysereaktor 5. Zur Gewährleistung einer anforderungsabhängigen Zuführung von Biomasse, beispielsweise Getreide und/oder halmartigen Energieträgern, ist der Pyrolysereaktor 5 unter Zwischenanordnung einer gasdichten Dosiereinrichtung 11 mit einem Vorratsbehälter 12 für die Biomasse verbunden. Der bei der Pyrolyse der Biomasse anfallende Biokoks wird über eine Entnahmeeinrichtung 14 dem Pyrolysereaktor 5 entnommen und kann einer weiteren Verwertung zugeführt werden. Zur weiteren Nutzung der durch den FLOX-Brenner 1 aus dem Pyrolysegas erzeugten thermischen Energie findet eine durch den Pfeil 15 angedeutete Wärmeauskopplung statt. Der FLOX-Brenner 1 kann beispielsweise zur Umwandlung der thermischen Energie in mechanische Energie mit einem Stirlingmotor verbunden sein, der wiederum einen Generator zur Erzeugung elektrischer Energie antreiben kann.

Die Vorrichtung ist beispielsweise in einem Leistungsbereich bis zu 50 kWth einsetzbar, in dem aus wirtschaftlichen Gründen Sekundärmaßnahmen zur Reduktion von Stickstoffoxiden ausscheiden. Die Reduktion der Emissionen erfolgt durch gezielte Eingriffe in den Feuerungsprozess. Hierbei bietet die Anwendung des nach dem so genannten FLOX-Verfahren (Flammlose Oxidation) arbeitenden FLOX-Brenners beispielsweise die Möglichkeit, durch die interne Abgasrezirkulation im FLOX-Brenner 1 die Spitzentemperatur der Feuerung herabzusetzen und so die Bildung von thermischen Stickstoffoxiden zu verhindern. Im Weiteren ist die Vorrichtung einsetzbar, um dem dezentralen Bedarf und der dezentralen Verfügbarkeit von Biomasse gerecht zu werden.

## Patentansprüche

1. Verfahren zur Erzeugung thermischer Energie mit einem FLOX-Brenner (1) mit einer internen Abgasrezirkulation, in dem eine flammlose Oxidation eines aus einer Biomasse, insbesondere aus Getreide und/oder halmartigen Energieträgern, gewonnenen Biogases stattfindet, **dadurch gekennzeichnet, dass** die Biomasse einem Pyrolysereaktor (5) zugeführt und das in dem Pyrolysereaktor gewonnene Gas dem FLOX-Brenner (1) über eine Gasleitung (6) zugeleitet wird, wobei der doppelwandig ausgebildete Pyrolysereaktor (5) außenseitig mit dem Abgas des FLOX-Brenners (1) beaufschlagt wird, das in einen über eine Abgasleitung mit dem FLOX-Brenner verbundenen Zwischenraum (5) geleitet wird, wobei Verbrennungsluft mittels eines in die Abgasleitung (13) eingesetzten Wärmetauschers (2) vorgewärmt wird.

2. Verfahren nach Anspruch 1, **dadurch gekennzeichnet, dass** der Pyrolysereaktor (5) kontinuierlich mit Biomasse, vorzugsweise Getreide und/oder halmartige Energieträger, beschickt wird.

3. Verfahren nach einem der Ansprüche 1 bis 2, **dadurch gekennzeichnet, dass** ein in dem Pyrolysereaktor (5) anfallender Biokoks einer energetischen Verwertung zugeführt wird.

4. Vorrichtung zur Erzeugung thermischer Energie mit einem FLOX-Brenner (1) mit einer internen Abgasrezirkulation, in dem eine flammlose Oxidation eines aus einer Biomasse, insbesondere aus Getreide und/oder halmartigen Energieträgern, gewonnenen Gases stattfindet, insbesondere zur Durchführung des Verfahrens nach Anspruch 1, **dadurch gekennzeichnet, dass** der FLOX-Brenner (1) mit einem Pyrolysereaktor (5) zur Erzeugung des Gases über eine Gasleitung (6) verbunden ist, wobei der Pyrolysereaktor (5) zur Bildung eines über eine Abgasleitung mit dem FLOX-Brenner verbundenen Zwischenraums (5) doppelwandig ausgebildet und in die Abgasleitung (13) ein Wärmetauscher (2) zur Vorwärmung von Verbrennungsluft eingesetzt ist.

5. Vorrichtung nach Anspruch 4, **dadurch gekennzeichnet, dass** der Pyrolysereaktor (5) in seinem Inneren zwei ineinander kämmende Schnecken (8, 9) aufweist.

6. Vorrichtung nach Anspruch 5, **dadurch gekennzeichnet, dass** die Schnecken (8, 9) mit einem Elektromotor (10) gekoppelt sind.

7. Vorrichtung nach Anspruch 4 oder 5, **dadurch gekennzeichnet, dass** der Pyrolysereaktor (5) mit einem Vorratsbehälter (12) für die Biomasse in Verbindung steht.

8. Vorrichtung nach Anspruch 7, **dadurch gekennzeichnet, dass** der Pyrolysereaktor (5) unter Zwischenanordnung einer gasdichten Dosiereinrichtung (11) mit dem Vorratsbehälter (12) verbunden ist.

9. Vorrichtung nach einem der Ansprüche 4 bis 8, **dadurch gekennzeichnet, dass** der Pyrolysereaktor (5) mit einer Entnahmeeinrichtung (14) für Biokoks versehen ist.

10. Vorrichtung nach einem der Ansprüche 4 bis 9, **dadurch gekennzeichnet, dass** der Brenner (1) mit einem Stirlingmotor gekoppelt ist.

## Claims

1. Method of generating thermal energy using a FLOX burner (1) with internal exhaust-gas recirculation, in which flameless oxidation of a biogas obtained from a biomass, in particular from cereals and/or herbaceous fuels, takes place, **characterized in that** the biomass is fed to a pyrolysis reactor (5) and the gas obtained in the pyrolysis reactor is passed to the FLOX burner (1) via a gas line (6), the double-walled pyrolysis reactor (5) being subjected on the outside to the exhaust gas of the FLOX burner (1), which is conducted into an intermediate space (5) that is connected to the FLOX burner via an exhaust-gas line, combustion air being preheated by means of a heat exchanger (2) fitted in the exhaust-gas line (13).

2. Method according to Claim 1, **characterized in that** the pyrolysis reactor (5) is continuously charged with biomass, preferably cereals and/or herbaceous fuels.

3. Method according to either of Claims 1 and 2, **characterized in that** a biocoke occurring in the pyrolysis reactor (5) is passed on for energy recovery.

4. Apparatus for generating thermal energy using a FLOX burner (1) with internal exhaust-gas recirculation, in which flameless oxidation of a gas obtained from a biomass, in particular from cereals and/or herbaceous fuels, takes place, in particular for carrying out the method according to Claim 1, **characterized in that** the FLOX burner (1) is connected to a pyrolysis reactor (5) for generating the gas via a gas line (6), the pyrolysis reactor (5) being of a double-walled form to form an intermediate space (5) that is connected to the FLOX burner via an exhaust-gas line, and a heat exchanger (2) for preheating combustion air being fitted in the exhaust-gas line (13).

5. Apparatus according to Claim 4, **characterized in that** the pyrolysis reactor (5) has in its interior two intermeshing screws (8, 9).

6. Apparatus according to Claim 5, **characterized in that** the screws (8, 9) are coupled to an electric motor (10).

7. Apparatus according to Claim 4 or 5, **characterized in that** the pyrolysis reactor (5) is in connection with a storage vessel (12) for the biomass.

8. Apparatus according to Claim 7, **characterized in that** the pyrolysis reactor (5) is connected to the storage vessel (12) with a gastight metering device (11) arranged in between.

9. Apparatus according to one of Claims 4 to 8, **characterized in that** the pyrolysis reactor (5) is provided with a removal device (14) for biocoke.

10. Apparatus according to one of Claims 4 to 9, **characterized in that** the burner (1) is coupled to a Stirling engine.

## Revendications

1. Procédé de production d'énergie thermique au moyen d'un brûleur FLOX (1) doté d'un recyclage interne des gaz d'échappement, dans lequel il se produit une oxydation sans flamme d'un biogaz obtenu à partir d'une biomasse, en particulier à partir de céréales et/ou de porteurs d'énergie de type paille, **caractérisé en ce que** l'on fournit la biomasse à un réacteur de pyrolyse (5) et on envoie au brûleur FLOX (1), par une conduite de gaz (6), le gaz obtenu dans le réacteur de pyrolyse, dans lequel le réacteur de pyrolyse (5) réalisé à double paroi est soumis extérieurement aux gaz d'échappement du brûleur FLOX (1), qui sont conduits dans un espace intermédiaire (5) raccordé au brûleur FLOX par une conduite de gaz d'échappement, dans lequel on préchauffe de l'air de combustion au moyen d'un échangeur de chaleur (2) introduit dans la conduite de gaz d'échappement (13).

2. Procédé selon la revendication 1, **caractérisé en ce que** l'on charge en continu le réacteur de pyrolyse (5) avec de la biomasse, de préférence des céréales et/ou des porteurs d'énergie du type paille.

3. Procédé selon l'une quelconque des revendications 1 à 2, **caractérisé en ce que** l'on fournit un biocoke, produit dans le réacteur de pyrolyse (5), en vue d'une valorisation énergétique.

4. Dispositif pour la production d'énergie thermique avec un brûleur FLOX (1) doté d'un recyclage interne des gaz d'échappement, dans lequel il se produit une oxydation sans flamme d'un gaz obtenu à partir d'une biomasse, en particulier de céréales et/ou de porteurs d'énergie de type paille, en particulier pour la mise en oeuvre du procédé selon la revendication 1, **caractérisé en ce que** le brûleur FLOX (1) est raccordé par une conduite de gaz (6) à un réacteur de pyrolyse (5) pour la production du gaz, dans lequel le réacteur de pyrolyse (5) est réalisé à double paroi pour la formation d'un espace intermédiaire (5) raccordé au brûleur FLOX par une conduite de gaz d'échappement, et un échangeur de chaleur (2) est introduit dans la conduite de gaz d'échappement (13) pour le préchauffage d'air de combustion.

5. Dispositif selon la revendication 4, **caractérisé en ce que** le réacteur de pyrolyse (5) présente dans son espace intérieur deux vis sans fin (8, 9) engrenant l'une dans l'autre.

6. Dispositif selon la revendication 5, **caractérisé en ce que** les vis sans fin (8, 9) sont couplées avec un moteur électrique (10).

7. Dispositif selon la revendication 4 ou 5, **caractérisé en ce que** le réacteur de pyrolyse (5) est en communication avec un réservoir de stockage (12) pour la biomasse.

8. Dispositif selon la revendication 7, **caractérisé en ce que** le réacteur de pyrolyse (5) est raccordé au réservoir de stockage (12) avec interposition d'un dispositif de dosage étanche au gaz (11).

9. Dispositif selon l'une quelconque des revendications 4 à 8, **caractérisé en ce que** le réacteur de pyrolyse (5) est doté d'un dispositif de réception (14) pour du biocoke.

10. Dispositif selon l'une quelconque des revendications 4 à 9, **caractérisé en ce que** le brûleur (1) est couplé à un moteur Stirling.
